# EUROPEAN PATENT SPECIFICATION

(11) **EP 4 190 601 B1**
(45) Date of publication and mention of the grant of the patent: **24.07.2024**
(21) Application number: 22210148.7
(22) Date of filing: 29.11.2022
(51) Int. Cl.: B60G 3/20, B60G 3/28, B62D 21/00, B60G 21/055, B60K 1/02, B60G 7/00, B60K 7/00, B62D 21/11

(54) **VEHICLE WITH AN IMPROVED SUSPENSION SYSTEM**
FAHRZEUG MIT EINEM VERBESSERTEN AUFHÄNGUNGSSYSTEM
VÉHICULE AVEC UN SYSTÈME DE SUSPENSION AMÉLIORÉ

(30) Priority: 01.12.2021 IT 202100030464
(43) Date of publication of application: 07.06.2023
(73) Proprietor: IVECO S.P.A., 10156 Torino (IT)
(72) Inventor: PEREIRA DE LEMOS, José Francivaldo, 10156 TORINO (IT)
(74) Representative: Studio Torta S.p.A.

(56) References cited:
- DE-A1- 102020 211 052
- DE-U1- 202016 105 828
- FR-A1- 2 691 930
- US-A1- 2004 112 657
- US-A1- 2021 162 873

## Description

### TECHNICAL FIELD

The present invention relates to a suspension system of a vehicle, in particular to a suspension system of a heavy or commercial vehicle equipped with an electronic traction.

### BACKGROUND OF THE INVENTION

Vehicles such as trucks, semitrailer trucks, buses or commercial vehicles are increasingly electrified in order to reduce their polluting emissions. In particular, such vehicles can be hybrid vehicles or purely electric vehicles.

In particular, electrified vehicles comprise at least one electric traction module equipped with electric machines such as, for example, motors/generators configured to provide torque to the wheels in order to enable their movement or in order to recharge battery modules of the vehicle during braking.

Such battery modules are usually arranged in the proximity of the electric machines of the electric axle in order to provide an efficient energy exchange with the electric machines.

However, as is known, an axle of a vehicle is connected to the frame of the latter by means of a suspension system configured to dampen the forces acting between the road and the frame.

If a vehicle is equipped with an electric traction module as described in the foregoing, the presence of the electric batteries increases the volume around the frame. Moreover, the presence of the electric motors increases the oscillating mass of the suspension system, thus rendering the performance of known suspension systems inadequate for this purpose.

Consequently, the known suspension systems for heavy vehicles are not appropriate due to the presence of the aforementioned electric traction modules.

Known suspension systems are disclosed in publications DE102020211052 A1, US2021 /162873 A1, FR2691930 A1, US2004/112657 A1 or DE202016105828 U1.

There is therefore a need to provide a new arrangement for a suspension system which can be mounted on an electric axle and which provides at least the same mechanical properties as known suspension systems.

An object of the present invention is to meet the aforementioned needs in a compact, optimized and cost-effective manner.

### SUMMARY OF THE INVENTION

The aforementioned object is achieved by a vehicle as claimed in the appended independent claim.

Preferred embodiments of the invention are provided according to the claims dependent on or related to the above mentioned independent claim.

### BRIEF DESCRIPTION OF THE DRAWINGS

For a better understanding of the present invention, a preferred embodiment is described in the following, in the form of a non-limiting example, with reference to the accompanying drawings, wherein:
- Figure 1 is a perspective view of a portion of a suspension system according to a first embodiment of the present invention;
- Figure 2 is a perspective bottom view of a vehicle portion comprising a suspension system according to a first embodiment of the present invention;
- Figure 3 is a top view of the suspension system of Figure 2;
- Figures 4A to 4C are side views of the suspension system of Figure 2 in different states of operation;
- Figure 5 is a perspective view of a portion of a suspension system according to a second embodiment of the present invention;
- Figure 6 is a perspective bottom view of a vehicle portion comprising a suspension system according to a second embodiment of the present invention;
- Figures 7 and 8 are respectively top and bottom views of the suspension system of Figure 6;
- Figure 9 is a side view of the suspension system of Figure 6 in an operating state.
- Figure 10 is a perspective view of a portion of a suspension system according to a third embodiment of the present invention;
- Figure 11 is a perspective bottom view of a vehicle portion comprising a suspension system according to a third embodiment of the present invention;
- Figures 12 and 13 are respectively top and bottom views of the suspension system of Figure 11;
- Figure 14 is a side view of the suspension system of Figure 11 in an operating state.
- Figure 15 is a side view of the suspension system of Figure 11 in an operating state.
- Figures 16 and 17 are respectively top and bottom perspective views of a vehicle portion comprising a suspension system according to a fourth embodiment of the present invention;
- Figures 18 and 19 are respectively top and bottom views of the suspension system of Figures 16 and 17;
- Figure 20 is a side view of the suspension system of Figure 16 in an operating state.

### DETAILED DESCRIPTION OF THE INVENTION

The attached figures show different embodiments of a - in particular rear - suspension system 1 of a heavy vehicle (not illustrated in its entirety) such as a commercial vehicle or a vehicle for public transport such as, for example, a truck, a semitrailer truck or a bus.

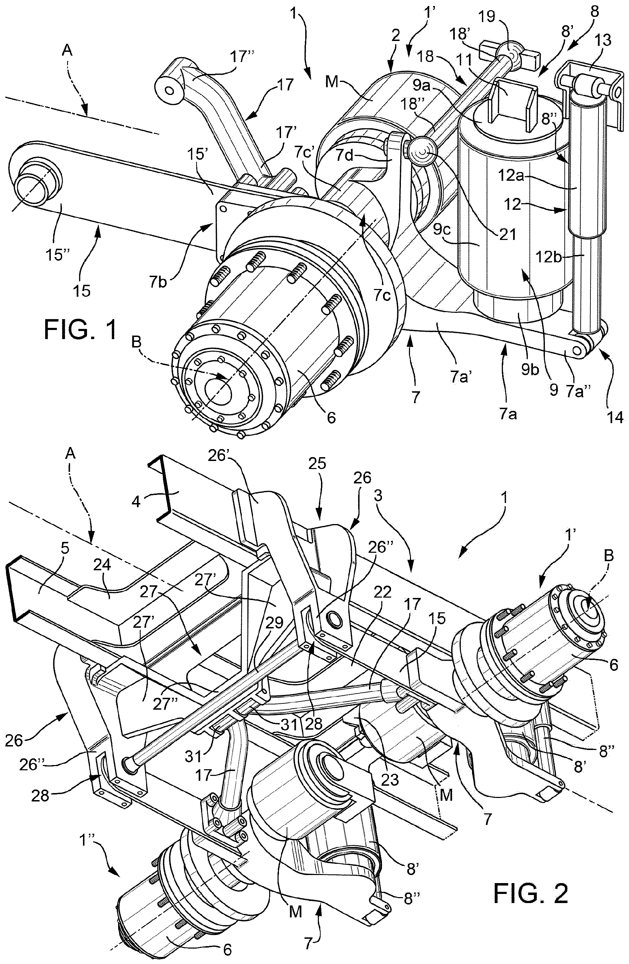

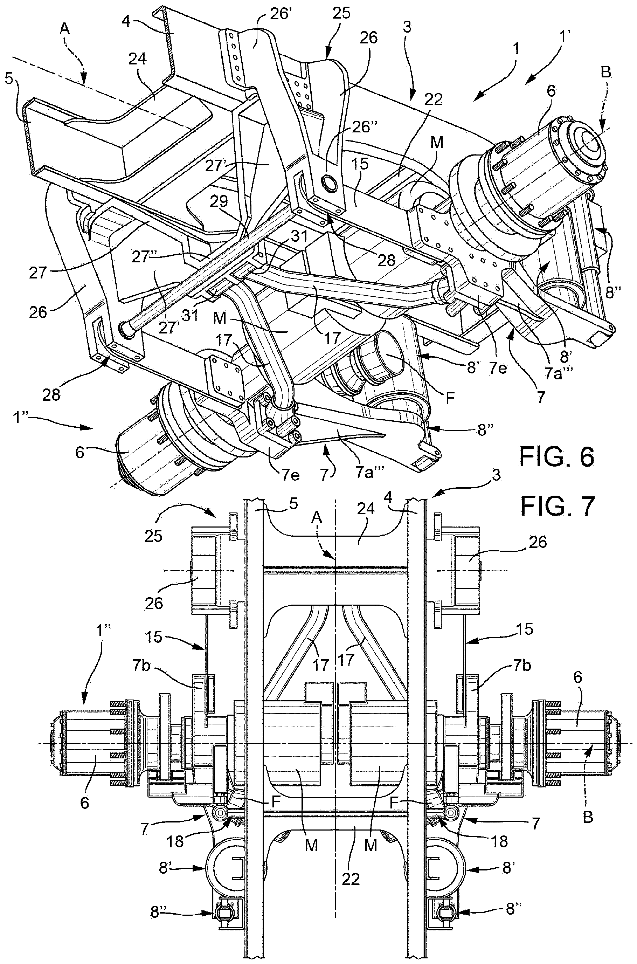

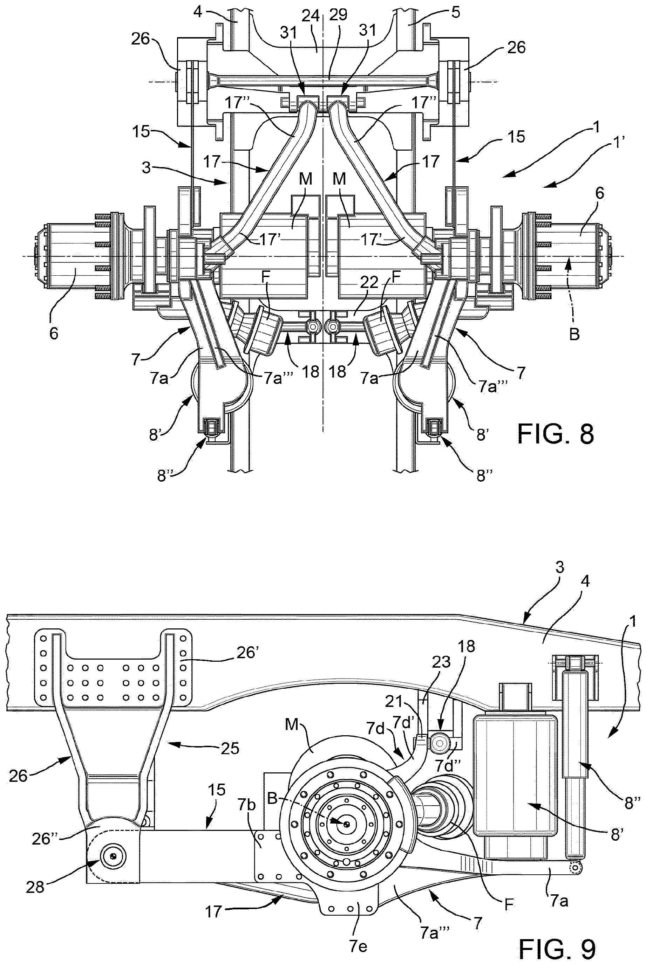

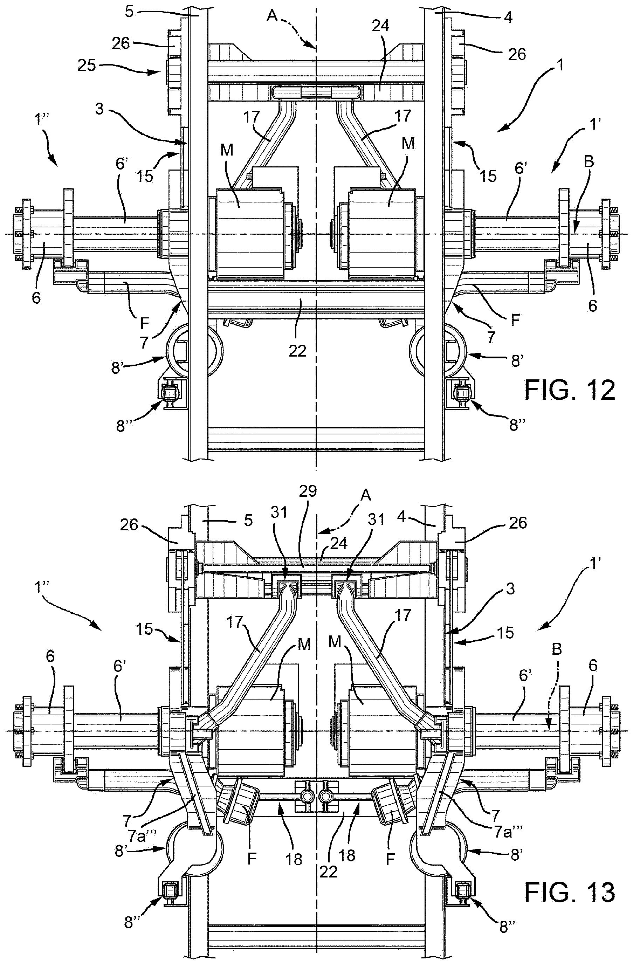

The characteristics common to the first three embodiments illustrated in the present application are described in the following with reference to Figures 1 to 14 in their entirety.

The vehicle comprises a frame 3, equipped, in a manner known *per se,* with a pair of longitudinal members 4, 5 extending along a longitudinal axis A of the vehicle and spaced apart transversely.

The vehicle also comprises an electric traction module 2 comprising at least one electric machine M electrically connected to at least one battery module (not shown) to provide torque to a wheel hub 6 operatively connected to the electric machine M in order to receive or provide torque depending on the operation of the vehicle.

In particular, each wheel hub 6 comprises at least one respective electric machine M which is accommodated in the space comprised laterally with respect to the axis A between the longitudinal members 4, 5. In particular, the electric machines M of the two wheel hubs 6 face each other, i.e. are arranged symmetrically with respect to the axis A along an axis B transverse and preferably perpendicular to the axis A. More specifically, they are not directly connected to each other mechanically.

It is in particular apparent that the suspension system 1 is essentially independent between the two wheel hubs 6, i.e. it comprises a left suspension group 1'' and a right suspension group 1'. Since the right and left groups 1', 1" are symmetrically identical with respect to the longitudinal axis A, for concision the suspension system 1 will be described in the following with reference to the right group 1' only.

The suspension system 1 comprises a metal cross member 7, i.e. an elastic cross member, comprising a front portion 7a and a rear portion 7b which extend along the longitudinal axis A from an intermediate portion 7c comprised longitudinally between the front and rear portions 7a, 7b.

In particular, the front portion 7a extends cantilevered from the intermediate portion 7c and defines an attachment portion 7a' and an end portion 7a". The attachment portion 7a' preferably has a tapered section, with a maximum section at the intermediate portion 7c and a minimum section at the end portion 7a". This minimum section is preferably the section of the end portion 7a", which is rectangular.

The rear portion 7b extends cantilevered from the intermediate portion 7c and preferably has a rectangular section. It is apparent that, advantageously, the rectangular section of the intermediate portion 7 has a longitudinal extension that is less than that of the front portion 7a as well as an extension in a plane perpendicular to the extension of the end portion 7a" of the front portion 7a.

The intermediate portion 7c comprises a main portion 7c' having an essentially circular shape and defining an opening (not visible) adapted for accommodating a, rotationally free, rotating shaft (not visible) connected (or connectable) to an operating shaft (not visible) of the rotating machine M.

The rotating machine M is carried by the elastic cross member 7, in particular is connected to the main portion 7c' of the intermediate portion 7c.

The elastic cross member 7 also defines a first support point 7d configured to enable the connection of an element of the suspension system 1 to the intermediate portion 7c, as further described in the following.

In particular, this first support point 7d extends above the intermediate portion 7c, i.e. in a position vertically higher than the front and rear portions 7a, 7b of the elastic cross member 7.

The right group 1' further comprises a damping system 8 operatively interposed between the front portion 7a of the elastic cross member 7 and the frame 3, i.e. one of the longitudinal members 4,5.

Advantageously, the damping system 8 comprises a first damping element 8' and a second damping element 8" between the front portion 7a of the elastic cross member 7 and the respective longitudinal member which define respective parallel stiffness and damping characteristics.

In particular, the first damping element 8' comprises a bellows 9 provided with an upper portion 9a configured to be connected to the frame 3, for example by means of a bracket 11, and a lower portion 9b which is connected, for example by means of a threaded element, to the front portion 7a. As is known *per se,* each bellows 9 comprises an air cushion 9c which is supported by upper and lower portions 9a, 9b and which is configured to accommodate pressurized air in order to dampen relative movements between these upper and lower portions 9a, 9b.

In particular, the second damping element 8" comprises a shock absorber 12. Preferably, the shock absorber 12 is a hydraulic shock absorber, i.e. a cylinder, comprising a housing 12a which is connected to the frame 3 and a rod 12b which is connected to the elastic cross member 7. As is known *per se,* the rod 12b is configured to move within the housing 12a against the action of a fluid contained in the housing 12a in order to dampen the relative movement between the frame 3 and the elastic cross member 7.

More specifically, the housing 12a is hinged via a first hinge connection 13 to the frame 3, i.e. to a respective longitudinal member 4. This hinge connection 13 allows a rotation of the housing 12a about an axis parallel to the longitudinal axis A.

The rod 12b, on the other hand, is hinged via a second hinge connection 14 to the end portion 7a" of the elastic cross member 7. This hinge connection 14 allows a rotation of the rod 12b about the axis parallel to the transverse axis B.

It is also apparent how in particular the second damping element 8" is placed longitudinally outside the first damping element 8'. In particular, the hinge connection 14 is provided at the end of the end portion 7a".

The right group 1' further comprises a longitudinal connecting plate 15 operatively interposed between the elastic cross member 7 and the frame 3. In particular, the connecting plate 15 comprises a front portion 15' rigidly connected to the rear portion 7b of the elastic cross member 7 and a rear portion 15" connected to the frame 3 as described in the following.

More specifically, the front portion 15' is attached to the rear portion 7b, for example by means of threaded connections. Preferably, the plate 15 has a rectangular section which extends parallel to that of the rear portion 7b.

The right group 1' further comprises a longitudinal connecting shaft 17 operatively interposed between the elastic cross member 7 and the frame 3. In particular, the longitudinal connecting shaft 17 comprises a front portion 17' connected to the elastic cross member 7 and a rear portion 17" connected to the frame 3 as described in the following.

The right group 1' further comprises a transverse connecting shaft 18 operatively interposed between the elastic cross member 7 and the frame 3. In particular, the transverse connecting shaft 18 comprises an inner portion 18' connected to the frame 3 and an outer portion 18" connected to the elastic cross member 7.

More specifically, the inner portion 18' is connected by means of a first hinge connection 19 to the frame 3, while the outer portion 18" is connected by means of a second hinge connection 21 to the metal cross member 7.

In particular, the first hinge connection 19 allows a rotation around an axis parallel to the longitudinal axis A. This first hinge connection 19 is provided on a cross member 22 that connects the longitudinal members 4, 5 to each other, in particular on a bracket 23 extending underneath it.

On the other hand, the second hinge connection 21 allows a rotation around an axis parallel to the longitudinal axis A. This second hinge connection 21 is provided on the first support point 7d of the intermediate portion 7c of the elastic cross member 7.

Turning to the longitudinal connecting plate 15 and shaft 17, they are connected to a connecting structure 25 that connects the longitudinal members 4, 5 to each other, preferably at a cross member 24.

In particular, the connecting structure 25 comprises a pair of brackets 26 configured to extend cantilevered from the respective longitudinal member 4, 5 vertically downwards, i.e. towards the ground. In particular, each bracket 26 comprises an upper portion 26' configured to be fixed to the longitudinal member 4, 5, advantageously outside the space comprised by the same, preferably by threaded means. Each bracket further comprises a lower portion 26" placed opposite the upper portion 26'.

The connecting structure 25 further comprises a connecting cross member 27 configured to connect the brackets 26 to each other, in particular between intermediate portions comprised vertically between the upper and lower portions 26', 26".

In particular, the connecting cross member 27 comprises a pair of side portions 27' and an intermediate portion 27". The intermediate portion is spaced apart from the cross member 24 vertically and the side portions 27' have a tapering section that connects the intermediate portion 24 to the brackets 26. In particular, the side portions 27' extend parallel to the axis B in a centreline position with respect to the longitudinal extension of the brackets 26.

Preferably, the connecting structure 25, i.e. the cross member 27 and the brackets 26, is provided as a single piece and thus has a high moment of inertia as a result of the geometry described above.

The longitudinal connecting plate 15 is advantageously connected to a bracket 26, preferably to the lower portion 26" of the same, by means of a hinge connection 28. More specifically, such a hinge connection 28 allows a rotation about an axis parallel to the transverse axis B. Preferably, the lower portion 26" is bifurcated and the rear portion 15" of the connecting plate 15 is hinged within said bifurcation.

Furthermore, advantageously, the suspension system 1 comprises a torsional bar 29 which is connected at its ends to the two connecting plates 15 and is thus hinged by means of the hinge connection 28 to the lower portion 26" of the brackets 26.

In particular, the torsional bar 29 is a linear cylindrical shaft having a constant section between the hinged ends in the hinge connections 28 and is placed vertically at the same height as the intermediate portion of the connecting cross member 27. The torsional bar 29 preferably extends along an axis parallel to the transverse axis B, thus perpendicular to the longitudinal axis A.

The longitudinal connecting shaft 17 is advantageously connected to the connecting cross member 27, advantageously to the intermediate portion 27" of the same, by means of a hinge connection 31. More specifically, this hinge connection 31 allows a rotation around an axis parallel to the transverse axis B.

In particular, it is apparent that the connecting shaft 17 is inclined with respect to the longitudinal axis A and that the connecting shafts 17 of the right and left suspension groups 1', 1" are symmetrical with respect to this axis.

Preferably, the hinge connections 31 are placed at the same height as the torsional bar 29 so that the connecting shafts 17 are also inclined with respect to the vertical direction.

With reference now to the first embodiment, illustrated in Figures 1 to 4A-4C, it is apparent that in this embodiment the lower portion 17" of the connecting shaft 17 is directly connected to the rear portion 7b of the metal cross member 7.

Moreover, the first support point 7d extends vertically from the main portion 7c' of the intermediate portion 7c so as to project from the latter and defines in its vertically upper end the connection hinge 21 for connecting the transverse shaft 18.

Also, the attachment portion 7a' of the elastic cross member 7 tapers parabolically between its maximum section and its minimum section.

Furthermore, as can be seen from the bottom views, the front portion 7a is placed at a shorter transverse distance from the frame 3 than the rear portion. More specifically, the end portion 7a" is essentially parallel to the rear portion 7b while the attachment portion 7a' connects the two so that it is inclined with respect to the transverse axis B.

In this embodiment, the connecting cross member 27 has a profile in the shape of a "V", i.e. the side portions 27' of the latter define a linear tapered profile from the point of connection with the bracket 26 to the intermediate portion 27" .

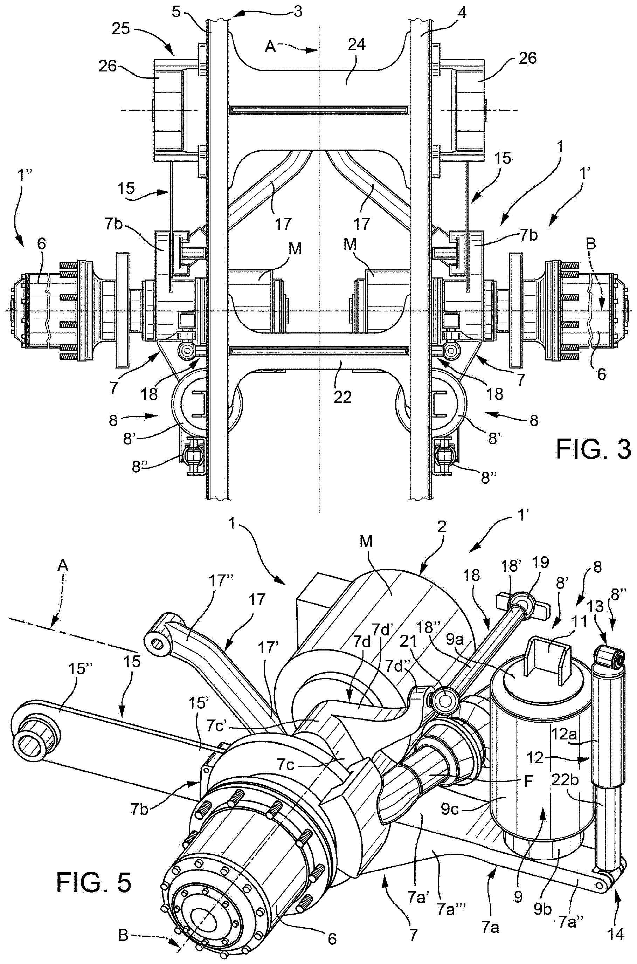

With reference now to the second embodiment, illustrated in Figures 5 to 9, it is apparent that the metal cross member defines a second support point 7e which extends cantilevered from the main portion 7c' of the intermediate portion 7c.

In particular, this second support point 7e has a rectangular section and extends vertically on the side opposite the first support point 7d.

The lower portion 17" of the connecting shaft 17 is directly connected to this second support point 7e and is thus shaped with a different vertical inclination from the first embodiment.

In addition, the first support point 7d comprises a first longitudinal portion 7d' extending cantilevered from the main portion 7c' of the intermediate portion 7c, advantageously towards the damping unit 8, and a vertical portion 7d" extending cantilevered from one end of the longitudinal portion 7d' and defining the support point for the hinge connection 21. The first support point thus has an "L" shape.

In this embodiment, the attachment portion 7a' of the elastic cross member 7 tapers linearly between its maximum section and its minimum section and also comprises a rib 7a‴ extending along the entire attachment portion 7a' configured to increase the stiffness of the same.

Furthermore, as can be seen from the bottom views, as in the preceding embodiment, the front portion 7a is placed at a shorter transverse distance from the frame 3 than the rear portion.

It is also apparent that the connecting cross member 27 has a profile in the shape of a "U", i.e. the side portions 27' of the latter define a linear tapered profile from the point of connection with the bracket 26 to the intermediate portion 27" provided with a vertical end part.

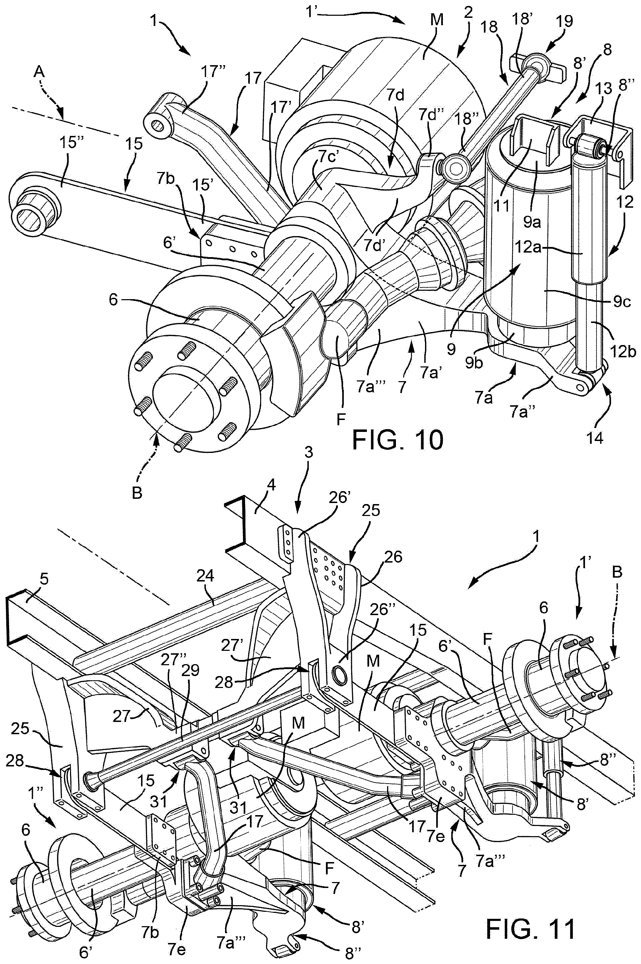

With reference now to the third embodiment, illustrated in Figures 10 to 14, it is apparent that the metal cross member defines a second support point 7e which extends cantilevered from the main portion 7c' of the intermediate portion 7c, as in the second embodiment.

In addition, the first support point 7d also has an "L" shape like in the second embodiment.

In this embodiment, the attachment portion 7a' of the elastic cross member 7 tapers parabolically between its maximum section and its minimum section and also comprises a rib 7a‴ extending along the entire attachment portion 7a' configured to increase the stiffness of the same.

Furthermore, as can be seen from the bottom views, the front portion 7a is placed at a shorter transverse distance from the frame 3 than the rear portion. More specifically, the end portion 7a' ' accommodating the second damping element 8" is essentially parallel to the rear portion 7b; the part of the end portion 7a" accommodating the first damping element 8' is parallel, but curves inwards, with respect to the rear portion 7b; the attachment portion 7a' is, as in the other embodiments, inclined with respect to the transverse axis B.

It is also apparent that the connecting cross member 27 has a flared profile, i.e. in which the side portions 27' of the latter define a curvilinear, in particular convex, tapered profile from the point of connection with the bracket 26 to the intermediate portion 27" provided with a vertical end part.

Furthermore, in this embodiment, the wheel hubs 6 are placed transversely at a greater distance from the frame 3, i.e. a casing 6' of a greater length connecting the rotating shaft (not shown) to the wheel hub 6 is provided.

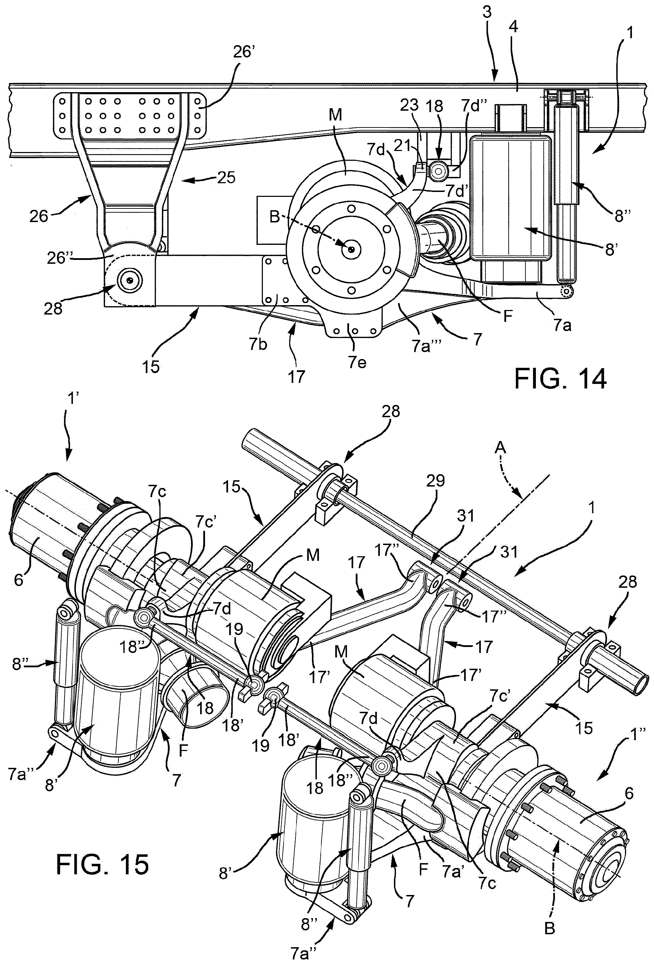

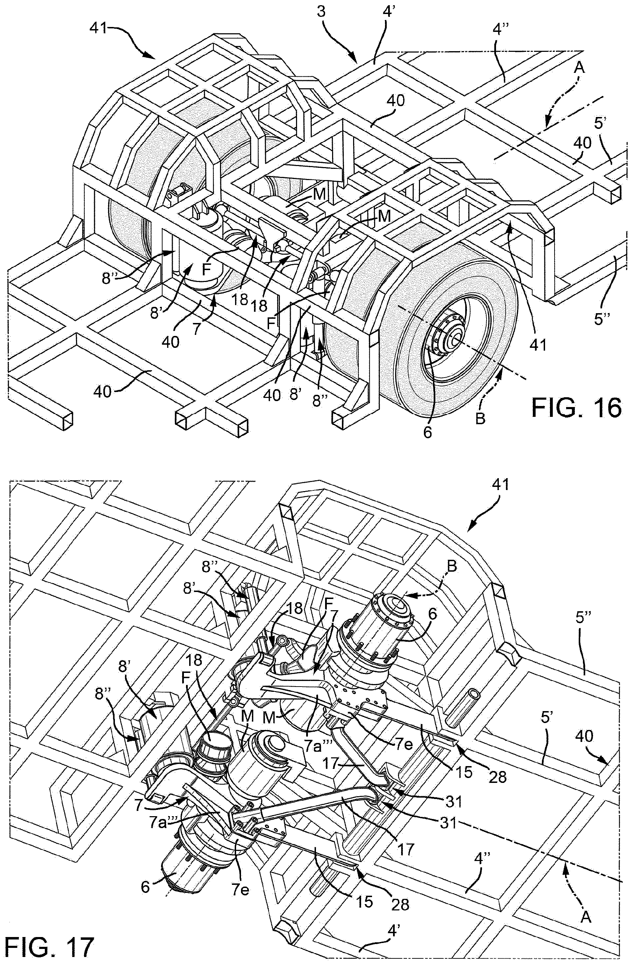

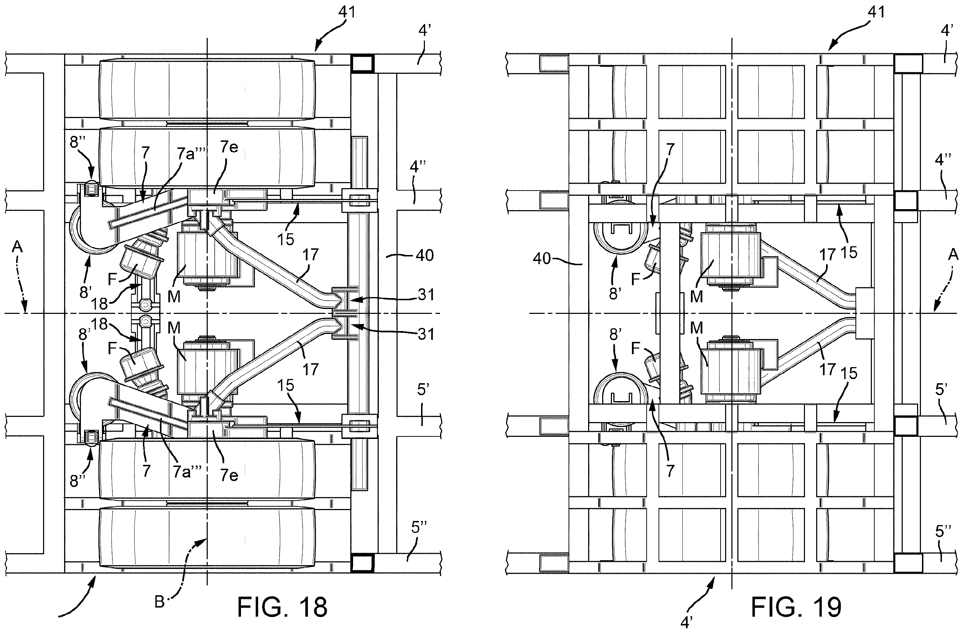

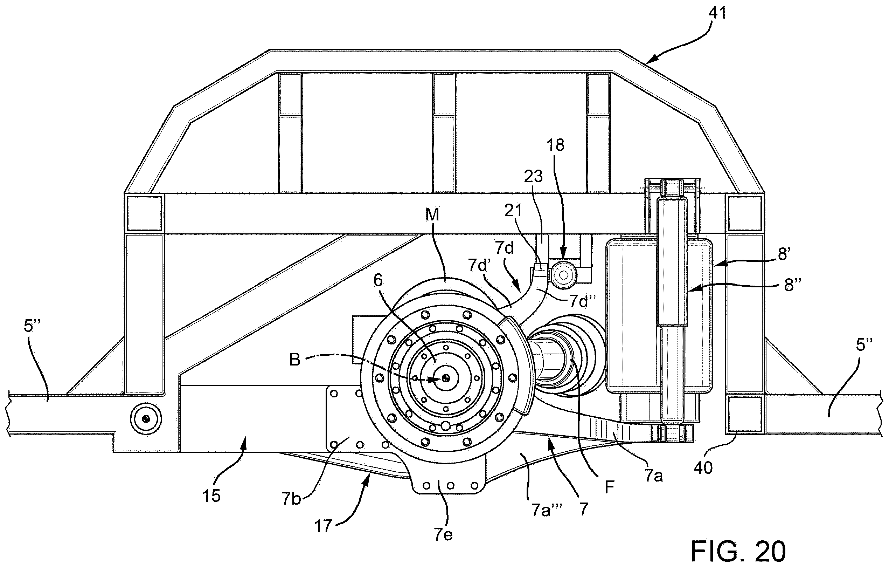

In the fourth embodiment of the invention, illustrated in Figures 15 to 20, the frame 3 differs in its constitution so that the suspension system 1 does not comprise the connecting structure 25, as described in greater detail in the following.

In this embodiment, the frame 3 is provided with a plurality of longitudinal elements 4', 4", 5', 5" extending along the longitudinal axis A of the vehicle and a plurality of transverse elements 40 connecting the longitudinal elements 4', 4", 5', 5" to one another.

The frame 3 also comprises a pair of shaped portions 41, again comprising longitudinal and transverse elements, configured to be raised with respect to the remaining parts of the frame 3, in order to enclose the wheel hubs 6 with the respective wheel systems and suspension systems.

In particular, these longitudinal elements 4', 4", 5', 5", the transverse elements 40 and the shaped portions 41 are provided as metal box-type sections. In particular, the frame portions with the exception of the shaped portions 41 are lower with respect to the suspension system 1 in order to provide a vehicle floor at the height of a standard pavement.

In contrast to the first three embodiments, the longitudinal connecting plate 15 is connected to one of the cross members 40 joining the longitudinal elements 4', 4", 5', 5" while the transverse connecting shaft 18 is connected to one of the elements that define the shaped portions 40.

The metal cross member 7 defines a second support point 7e extending cantilevered from the main portion 7c' of the intermediate portion 7c, analogously to the second and third embodiments.

Moreover, the first support point 7d also has an "L" shape, as in the second and third embodiments.

Analogously to the third embodiment, the attachment portion 7a' of the elastic cross member 7 tapers parabolically between its maximum section and its minimum section and also comprises a rib 7a‴ extending along the entire attachment portion 7a' configured to increase the stiffness of the same.

Due to the absence of the connecting structure 25, the torsional bar 29, the longitudinal connecting plate 15 and the longitudinal connecting shaft 17 are connected to the elements that make up the shaped portion 41 of the frame 3.

Furthermore, it is apparent that the end portion 7a" extends cantilevered from the attachment portion 7a' in a transverse direction, i.e. along the axis B. In particular, it extends directly towards the space outside the space comprised between the elastic cross members 7. Consequently, the second damping element 8" is flanked transversely by the first damping element 8'.

It is understood that the suspension system 1 can comprise further elements not described here and designed to enable the assembly/arrangement of the aforementioned elements and not described for the sake of concision.

The operation of the suspension system 1 described above is set out in the following.

During the movement of the vehicle, the wheel hub 6 follows the bumps of the road and can move with respect to the frame 3 of the vehicle. In particular, in addition, the appropriate torque for moving the vehicle is provided by at least one motor M.

These movements are dampened by the suspension system 1, in particular:
- vertical movements are dampened by the damping unit 8, i.e. by the first damping element 8' and by the second damping element 8";
- transverse movements are compensated by the transverse retaining element 18 and by the longitudinal retaining shaft 17;
- longitudinal movements are compensated by the longitudinal retaining plate 15 and by the longitudinal retaining shaft 17;
- torque movements are compensated by the stabilizer bar 29.

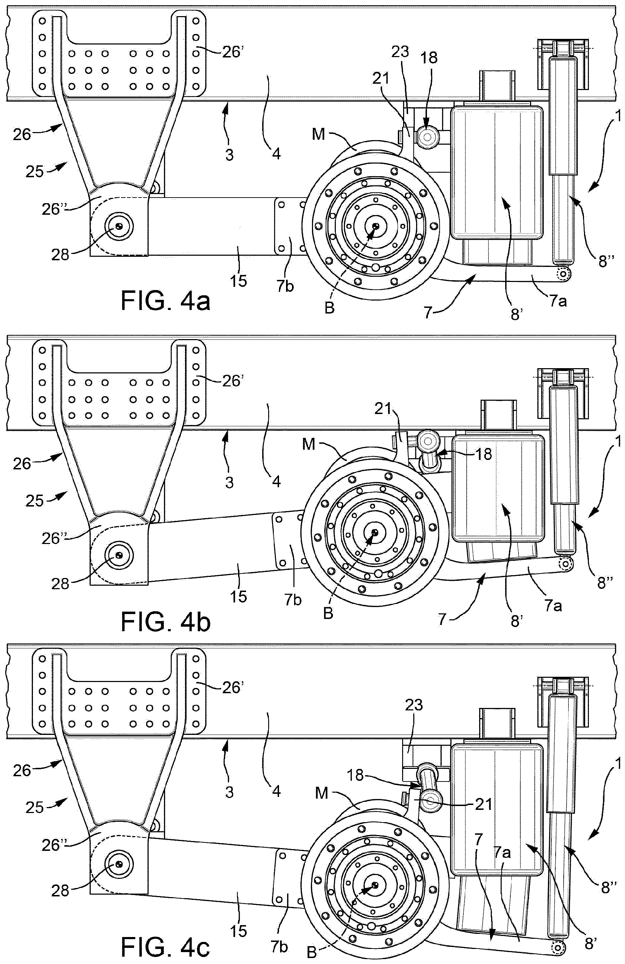

In particular, three different operating states of the suspension system 1 are illustrated in Figures 4A-4C.

Figure 4A illustrates a standard operating state without any excessive stresses that can modify the attitude of the suspension.

Figure 4B illustrates an operating state in which the wheel hub 6 tends to rise and approaches the frame 3 so that in this state the damping unit 8 is compressed, thus providing a force to the elastic element, which tends to tilt with respect to the connection to the support structure and thus with respect to the torsional bar 29. Similarly, the retaining elements 17 and 18 tilt as a result and supply balancing forces.

Figure 4C illustrates an operating state in which the wheel hub 6 tends to be lowered and moves away from the frame 3 so that in this state the damping unit 8 expands, thus providing a force (opposite to Figure 4B) to the elastic element, which tends to tilt with respect to the connection to the support structure and thus with respect to the torsional bar 29. Similarly, the retaining elements 17 and 18 tilt as a result and supply balancing forces.

In light of the foregoing, the advantages of the described suspension system according to the invention are evident.

The proposed suspension system 1 allows the installation of the suspension 1 even with an electric traction module while simultaneously maintaining excellent mechanical properties.

Furthermore, the suspension system 1 results independent between the wheel hubs 6, which thus allows a high suspension capacity of the vehicle frame.

The arrangement of the first support point and damping unit provides a space that allows accommodating the braking system F, illustrated in its entirety or partially in the figures.

Furthermore, the proposed suspension system 1 is highly versatile. In fact, by varying the geometry of the elastic cross member 7 while keeping the other elements essentially unaltered, it is possible to utilize almost all the elements comprised by the suspension system for different vehicle types and sizes, even for buses having lowered frames.

In addition, the proposed suspension system 1 is particularly compact inasmuch as most of the elements are accommodated at the longitudinal members or outside the space comprised by the same, thus leaving the space comprised by the longitudinal members for the accommodation of the electric machines M.

Modifications can evidently be made to the described suspension system that do not extend beyond the scope of protection defined by the claims.

For example, the present position and the present shape of the elements of the suspension 1 can vary within the limits of the appended claims.

Furthermore, the suspension system 1 can be provided for front or rear wheel hubs.

The fastening means, hinges and connections shown and described can vary and be replaced by equivalent means.

## Claims

1. Vehicle comprising at least one electric traction module (2; M) configured to exchange torque with wheel hubs (6) of said vehicle, and a frame (3),
wherein said vehicle extends along a longitudinal axis (A) and said electric traction module (2; M) is placed along a transverse axis (B) inclined with respect to said longitudinal axis (A),
said vehicle comprising a suspension system (1) for said connection of the electric traction module (2; M) with said frame, said suspension system (1) comprising a right (1') and left (1") suspension group with respect to said longitudinal axis (A), each group comprising:
• - a support element (7) comprising a front portion and a rear portion (7a, 7b) along said longitudinal axis (A) each operatively connected to said frame (3) and an intermediate portion (7c) comprised between the latter;
• - a damping unit (8) operatively interposed between said support element (7) and said frame (3);
• - a pair of longitudinal retaining elements (15, 17) operatively interposed between said frame (3) and said support element (7);
• - a transversal retaining element (18) operatively interposed between said support element (7) and said frame (3);
said suspension system (1) comprising a stabilizer bar (29) operatively interposed between said right and left suspension groups (1', 1"),
wherein the electric traction module (2; M) is carried by said intermediate portion (7c) which defines an opening through which passes a rotating shaft connected to said electric traction module (2; M) and in which said front portion (7a) comprises an attachment portion (7a') in direct contact with said intermediate portion (7c) and an end portion (7a") extending from said attachment portion (7a), said damping system (8) being interposed between said frame (3) and said end portion (7a").

2. The vehicle according to claim 1, wherein said attachment portion (7a') comprises a rib (7a‴).

3. The vehicle according to claim 1 or 2, wherein said attachment portion (7a') has a variable section between a maximum and a minimum value.

4. The vehicle according to claim 3, wherein said section varies in a linear, parabolic or hyperbolic way.

5. The vehicle according to one of claims 2 to 4, wherein said damping system (8) is interposed between said end portion (7a") and said frame (3).

6. The vehicle according to one of the preceding claims, wherein said support element (7) defines a first support point (7d) extending vertically above said intermediate portion (7c), said transverse retaining element (18) being interposed between said first support point (7d) and said frame (3).

7. The vehicle according to claim 6, wherein said first support point (7d) has an "L" shape comprising a longitudinal portion (7d') extending cantilevered from said central portion (7c) and a vertical portion (7d") extending from said longitudinal portion (7d').

8. The vehicle according to claim 6 or 7, wherein said transverse retaining element (18) is connected by respective hinge connections (19, 21) to said frame (3) and to said first support point (7d).

9. The vehicle according to one of the preceding claims, wherein both of said longitudinal retaining elements (15, 17) comprise a first end fixed to said support element (7) and a second end connected by means of a hinge connection (28; 31) to said frame.

10. The vehicle according to claim 9, wherein a first longitudinal retaining element (15) comprises a first portion rigidly connected to said rear portion (7b) of said support element and a second portion connected by means of a hinge connection (28) to said frame (3).

11. The vehicle according to claim 9 or 10, wherein a second longitudinal retaining element (17) comprises a first portion rigidly connected to said rear portion (7b) of said support element and a second portion connected by means of a hinge connection (31) to said frame (3).

12. The vehicle according to claim 9 or 10, wherein a second longitudinal retaining element (17) comprises a first portion rigidly connected to a second support point (7e) of said support element and a second portion connected by means of a hinge connection (31) to said frame (3), said second support point (7e) extending vertically below said intermediate portion (7c).

13. The vehicle according to one of the preceding claims, wherein said damping unit (8) comprises a bellows (9) and a shock absorber (12) in parallel between said end portion (7a") and said frame (3).

14. The vehicle according to claim 13, wherein said shock absorber (12) is longitudinally flanked by said bellows (9) or transversely flanked by said bellows (9).

15. The vehicle according to one of the preceding claims, wherein said frame (3) is of the lowered type, said frame (3) comprising a plurality of longitudinal and transverse elements (4', 4", 5', 5", 40) extending below said electric traction module (2; M) and a shaped portion (41) extending above said electric traction module (2; M) and said wheel hubs (6), said system suspension (1) defining the connections mentioned in the previous claims with said shaped portion (41) of said frame (3).

16. The vehicle according to one of the preceding claims, wherein said frame (3) comprises a pair of longitudinal members (4, 5) extending parallel to said longitudinal axis (A) and at least one pair of cross members (22, 24) extending along said transverse axis (B) above said electric traction module (2; M) and said wheel hubs (6), said suspension system (1) being operationally interposed between said longitudinal members (4, 5) and/or said cross members (22, 24) of said frame (3).

17. The vehicle according to claim 16 when dependent on claims 1 to 14, wherein said frame comprises a support structure (25) coupled to said longitudinal members (4, 5) and provided with a pair of lateral brackets (26) extending cantilevered from said longitudinal members (4, 5) and a connecting crosspiece (27) laterally interposed between said brackets (26), one of said pair of longitudinal retaining elements (15, 17) being connected to a respective bracket (26) and the other of said pair of longitudinal retaining elements (15, 17) being connected to said connecting crosspiece (27).

18. The vehicle according to claim 17, wherein the other of said pair of longitudinal retaining elements is connected to said connecting crosspiece (27) which is inclined with respect to said longitudinal axis (A) and an axis vertical to the ground.

19. The vehicle according to claim 17 or 18, wherein said stabilizer bar (29) is hinged to said brackets (26).

20. The vehicle according to claim 19, wherein said stabilizer bar (29) is hinged in a vertically lower end position of said brackets (26).

## Patentansprüche

1. Fahrzeug, umfassend zumindest ein elektrisches Traktionsmodul (2; M), ausgebildet zum Austausch eines Drehmoments mit Radnaben (6) des Fahrzeugs, und einen Rahmen (3), welches Fahrzeug sich entlang einer Längsachse (A) erstreckt, wobei das elektrische Traktionsmodul (2; M) entlang einer Querachse (B) angeordnet ist, die bezüglich der Längsachse (A) geneigt ist,
welches Fahrzeug ein Aufhängungssystem (1) zur Verbindung des elektrischen Traktionsmoduls (2; M) mit dem Rahmen umfasst, welches Aufhängungssystem (1) eine rechte (1') und eine linke (1") Aufhängungsgruppe bezüglich der Längsachse (A) umfasst, von denen jede Gruppe umfasst:
- ein Lagerelement (7), umfassend einen vorderen und einen hinteren Teil (7a, 7b) entlang der Längsachse (A), die jeweils operativ mit dem Rahmen (3) verbunden sind, und einen mittleren Teil (7c), der zwischen den letzteren vorgesehen ist,
- eine Dämpfungseinheit (8), die operativ zwischen dem Lagerelement (7) und dem Rahmen (3) angeordnet ist,
- ein Paar von Längs-Halteelementen (15, 17), die operativ zwischen dem Rahmen (3) und dem Lagerelement (7) angeordnet sind,
- ein Quer-Halteelement (18), das operativ zwischen dem Lagerelement (7) und dem Rahmen (3) angeordnet ist,
welches Aufhängungssystem (1) eine Stabilisatorstange (29) umfasst, die operativ zwischen den rechten und linken Aufhängungsgruppen (1', 1") angeordnet ist,
wobei das elektrische Traktionsmodul (2; M) durch den mittleren Teil (7c) getragen wird, welcher eine Öffnung begrenzt, durch welche sich eine rotierende Welle erstreckt, die mit dem elektrischen Traktionsmodul (2; M) verbunden ist, wobei der vordere Teil (7a) einen Befestigungsteil (7a') in direktem Kontakt mit dem mittleren Teil (7c) und einem Endteil (7a") umfasst, der sich von dem Befestigungsteil (7a) aus erstreckt, wobei das Dämpfungssystem (8) zwischen dem Rahmen (3) und dem Endteil (7a") angeordnet ist.

2. Fahrzeug gemäß Anspruch 1, bei welchem der Befestigungsteil (7a') eine Rippe (7a‴) umfasst.

3. Fahrzeug gemäß Anspruch 1 oder 2, bei welchem der Befestigungsteil (7a') einen variablen Querschnitt zwischen einem maximalen und einem minimalen Wert aufweist.

4. Fahrzeug gemäß Anspruch 3, bei welchem der Querschnitt in linearer, parabolischer oder hyperbolischer Weise variiert.

5. Fahrzeug gemäß einem der Ansprüche 2 bis 4, bei welchem das Dämpfungssystem (8) zwischen dem Endteil (7a") und dem Rahmen (3) angeordnet ist.

6. Fahrzeug gemäß einem der vorhergehenden Ansprüche, bei welchem das Lagerelement (7) einen ersten Lagerpunkt (7d) definiert, der sich vertikal oberhalb des mittleren Teils (7c) erstreckt, wobei das Quer-Halteelement (18) zwischen dem ersten Lagerpunkt (7d) und dem Rahmen (3) angeordnet ist.

7. Fahrzeug gemäß Anspruch 6, bei welchem der erste Lagerpunkt (7d) eine "L"-Form aufweist, umfassend einen Längsteil (7d'), der von dem mittleren Teil (7c) auskragt, und einen vertikalen Teil (7d"), der sich von dem Längsteil (7d') aus erstreckt.

8. Fahrzeug gemäß Anspruch 6 oder 7, bei welchem das Quer-Halteelement (18) durch entsprechende Scharnierverbindungen (19, 21) mit dem Rahmen (3) und mit dem ersten Lagerpunkt (7d) verbunden ist.

9. Fahrzeug gemäß einem der vorhergehenden Ansprüche, bei welchem beide Längs-Halteelemente (15, 17) ein erstes Ende umfassen, das an dem Lagerelement (7) befestigt ist, und ein zweites Ende, welches durch eine Scharnierverbindung (28; 31) mit dem Rahmen verbunden ist.

10. Fahrzeug gemäß Anspruch 9, bei welchem ein erstes Längs-Halteelement (15) einen ersten Teil umfasst, der starr mit dem hinteren Teil (7b) des Lagerelements verbunden ist, und einen zweiten Teil, der durch eine Scharnierverbindung (28) mit dem Rahmen (3) verbunden ist.

11. Fahrzeug gemäß Anspruch 9 oder 10, bei welchem ein zweites Längs-Halteelement (17) einen ersten Teil umfasst, der starr mit dem hinteren Teil (7b) des Lagerelements verbunden ist, und einen zweiten Teil, der durch eine Scharnierverbindung (31) mit dem Rahmen (3) verbunden ist.

12. Fahrzeug gemäß Anspruch 9 oder 10, bei welchem ein zweites Längs-Halteelement (17) einen ersten Teil umfasst, der starr mit einem zweiten Lagerpunkt (7e) des Lagerelements verbunden ist, und einen zweiten Teil, der durch eine Scharnierverbindung (31) mit dem Rahmen (3) verbunden ist, wobei der zweite Lagerpunkt (7e) sich vertikal von dem mittleren Teil (7c) erstreckt.

13. Fahrzeug gemäß einem der vorhergehenden Ansprüche, bei welchem die Dämpfungseinheit (8) einen Balg (9) und einen Stoßdämpfer (12) umfasst, die parallel zwischen dem Endteil (7a") und dem Rahmen (3) angeordnet sind.

14. Fahrzeug gemäß Anspruch (13), bei welchem der Stoßdämpfer (12) in Längsrichtung durch den Balg (9) flankiert ist oder in Querrichtung durch den Balg (9) flankiert ist.

15. Fahrzeug gemäß einem der vorhergehenden Ansprüche, bei welchem der Rahmen (3) vom abgesenkten Typ ist und der Rahmen (3) eine Mehrzahl von Längs- und Querelementen (4', 4", 5', 5", 40) umfasst, die sich unterhalb des elektrischen Traktionsmoduls (2; M) erstrecken, sowie einen geformten Teil (41), der sich oberhalb des elektrischen Traktionsmoduls (2; M) und den Radnaben (6) erstreckt, wobei die Systemaufhängung (1) die in den vorhergehenden Ansprüchen genannten Verbindungen durch den geformten Teil (41) des Rahmens (3) definiert.

16. Fahrzeug gemäß einem der vorhergehenden Ansprüche, bei welchem der Rahmen (3) ein Paar von Längsteilen (4, 5), die sich parallel zur Längsachse (A) erstrecken, und zumindest ein Paar von Querteilen (22, 24) umfasst, die sich entlang der Querachse (B) oberhalb des elektrischen Traktionsmoduls (2; M) und der Radnaben (2) erstrecken, wobei das Aufhängungssystem (1) operativ zwischen den Längselementen (4, 5) und/oder den Querelementen (22, 24) des Rahmens (3) angeordnet ist.

17. Fahrzeug gemäß Anspruch 16, wenn abhängig von den Ansprüchen 1 bis 14, bei welchem der Rahmen eine Lagerstruktur (25) umfasst, die mit den Längselementen (4, 5) gekoppelt ist und mit einem Paar seitlicher Klammern (26) versehen ist, die von den Längselementen (4, 5) auskragen, und ein Verbindungsquerstück (27), das seitlich zwischen den Klammern (26) angeordnet ist, wobei eines von dem Paar von Längs-Halteelementen (15, 17) mit einer jeweiligen Klammer (26) verbunden ist und das andere von dem Paar von Längs-Halteelementen (15, 17) mit dem Verbindungsquerstück (27) verbunden ist.

18. Fahrzeug gemäß Anspruch 17, bei welchem das andere aus dem Paar von Längs-Halteelementen mit dem Verbindungsquerstück (27) verbunden ist, welches bezüglich der Längsachse (A) und einer Achse vertikal zum Boden geneigt ist.

19. Fahrzeug gemäß Anspruch 17 oder 18, bei welchem die Stabilisatorstange (29) an die Klammern (26) angelenkt ist.

20. Fahrzeug gemäß Anspruch 19, bei welchem die Stabilisatorstange (29) in einer vertikal unteren Endposition der Klammern (26) angelenkt ist.

## Revendications

1. Véhicule comprenant au moins un module à traction électrique (2 ; M) configuré pour échanger le couple avec des moyeux de roue (6) dudit véhicule, et un châssis (3),
dans lequel ledit véhicule s'étend le long d'un axe longitudinal (A) et ledit module à traction électrique (2 ; M) est placé le long d'un axe transversal (B) incliné par rapport audit axe longitudinal (A),
ledit véhicule comprenant un système de suspension (1) pour ledit raccordement du module à traction électrique (2 ; M) avec ledit châssis, ledit système de suspension (1) comprenant un groupe de suspension droite (1') et gauche (1'') par rapport audit axe longitudinal (A), chaque groupe comprenant :
un élément de support (7) comprenant une partie avant et une partie arrière (7a, 7b) le long dudit axe longitudinal (A), chacune raccordée, de manière opérationnelle, audit châssis (3) et une partie intermédiaire (7c) comprise entre ces dernières ;
une unité d'amortissement (8) intercalée, de manière opérationnelle, entre ledit élément de support (7) et ledit châssis (3) ;
une paire d'éléments de retenue longitudinaux (15, 17) intercalés de manière opérationnelle entre ledit châssis (3) et ledit élément de support (7) ;
un élément de retenue transversal (18) intercalé, de manière opérationnelle, entre ledit élément de support (7) et ledit châssis (3) ;
ledit système de suspension (1) comprenant une barre stabilisatrice (29) intercalée, de manière opérationnelle, entre lesdits groupes de suspension droite et gauche (1', 1''),
dans lequel le module à traction électrique (2 ; M) est porté par ladite partie intermédiaire (7c) qui définit une ouverture à travers laquelle passe un arbre de rotation raccordé audit module à traction électrique (2 ; M) et dans laquelle ladite partie avant (7a) comprend une partie de fixation (7a') en contact direct avec ladite partie intermédiaire (7c) et une partie d'extrémité (7a") s'étendant à partir de ladite partie de fixation (7a), ledit système d'amortissement (8) étant intercalé entre ledit châssis (3) et ladite partie d'extrémité (7a'').

2. Véhicule selon la revendication 1, dans lequel ladite partie de fixation (7a') comprend une nervure (7a‴).

3. Véhicule selon la revendication 1 ou 2, dans lequel ladite partie de fixation (7a') a une section variable entre une valeur maximum et une valeur minimum.

4. Véhicule selon la revendication 3, dans lequel ladite section varie d'une manière linéaire, parabolique ou hyperbolique.

5. Véhicule selon l'une des revendications 2 à 4, dans lequel ledit système d'amortissement (8) est intercalé entre ladite partie d'extrémité (7a") et ledit châssis (3).

6. Véhicule selon l'une des revendications précédentes, dans lequel ledit élément de support (7) définit un premier point de support (7d) s'étendant verticalement au-dessus de ladite partie intermédiaire (7c), ledit élément de retenue transversal (18) étant intercalé entre ledit premier point de support (7d) et ledit châssis (3).

7. Véhicule selon la revendication 6, dans lequel ledit premier point de support (7d) a une forme de « L » comprenant une partie longitudinale (7d') s'étendant en porte-à-faux à partir de ladite partie centrale (7c) et une partie verticale (7d") s'étendant à partir de ladite partie longitudinale (7d').

8. Véhicule selon la revendication 6 ou 7, dans lequel ledit élément de retenue transversal (18) est raccordé par des raccordements à charnière (19, 21) respectifs audit châssis (3) et audit premier point de support (7d).

9. Véhicule selon l'une des revendications précédentes, dans lequel deux desdits éléments de retenue longitudinaux (15, 17) comprennent une première extrémité fixée audit élément de support (7) et une seconde extrémité raccordée au moyen d'un raccordement à charnière (28 ; 31) audit châssis.

10. Véhicule selon la revendication 9, dans lequel un premier élément de retenue longitudinal (15) comprend une première partie rigidement raccordée à ladite partie arrière (7b) dudit élément de support et une seconde partie raccordée au moyen d'un raccordement à charnière (28) audit châssis (3).

11. Véhicule selon la revendication 9 ou 10, dans lequel un second élément de retenue longitudinal (17) comprend une première partie rigidement raccordée à ladite partie arrière (7b) dudit élément de support et une seconde partie raccordée au moyen d'un raccordement à charnière (31) audit châssis (3).

12. Véhicule selon la revendication 9 ou 10, dans lequel un second élément de retenue longitudinal (17) comprend une première partie rigidement raccordée à un second point de support (7e) dudit élément de support et une seconde partie raccordée au moyen d'un raccordement à charnière (31) audit châssis (3), ledit second point de support (7e) s'étendant verticalement au-dessous de ladite partie intermédiaire (7c).

13. Véhicule selon l'une des revendications précédentes, dans lequel ladite unité d'amortissement (8) comprend un soufflet (9) et un amortisseur (12) en parallèle entre ladite partie d'extrémité (7a") et ledit châssis (3).

14. Véhicule selon la revendication 13, dans lequel ledit amortisseur (12) est longitudinalement flanqué par ledit soufflet (9) ou transversalement flanqué par ledit soufflet (9).

15. Véhicule selon l'une des revendications précédentes, dans lequel ledit châssis (3) est du type rabaissé, ledit châssis (3) comprenant une pluralité d'éléments longitudinaux et transversaux (4', 4'', 5', 5'', 40) s'étendant au-dessous dudit module à traction électrique (2 ; M) et une partie façonnée (41) s'étendant au-dessus dudit module à traction électrique (2 ; M) et desdits moyeux de roue (6), ledit système de suspension (1) définissant les raccordements mentionnés dans les précédentes revendications avec ladite partie façonnée (41) dudit châssis (3).

16. Véhicule selon l'une des revendications précédentes, dans lequel ledit châssis (3) comprend une paire d'éléments longitudinaux (4, 5) s'étendant parallèlement audit axe longitudinal (A) et au moins une paire de traverses (22, 24) s'étendant le long dudit axe transversal (B) au-dessus dudit module à traction électrique (2 ; M) et desdits moyeux de roue (6), ledit système de suspension (1) étant intercalé, de manière opérationnelle, entre lesdits éléments longitudinaux (4, 5) et/ou lesdites traverses (22, 24) dudit châssis (3).

17. Véhicule selon la revendication 16, lorsqu'elle dépend des revendications 1 à 14, dans lequel ledit châssis comprend une structure de support (25) couplée auxdits éléments longitudinaux (4, 5) et prévue avec une paire de consoles latérales (26) s'étendant en porte-à-faux à partir desdits éléments longitudinaux (4, 5) et une traverse de raccordement (27) latéralement intercalée entre lesdites consoles (26), l'un de ladite paire d'éléments de retenue longitudinaux (15, 17) étant raccordé à une console (26) respective et l'autre de ladite paire d'éléments de retenue longitudinaux (15, 17) étant raccordé à ladite traverse de raccordement (27) .

18. Véhicule selon la revendication 17, dans lequel l'autre de ladite paire d'éléments de retenue longitudinaux est raccordé à ladite traverse de raccordement (27) qui est inclinée par rapport audit axe longitudinal (A) et à un axe vertical par rapport au sol.

19. Véhicule selon la revendication 17 ou 18, dans lequel ladite barre stabilisatrice (29) est articulée par charnière auxdites consoles (26).

20. Véhicule selon la revendication 19, dans lequel ladite barre stabilisatrice (29) est articulée par charnière dans une position d'extrémité verticalement inférieure desdites consoles (26).
